# EUROPEAN PATENT APPLICATION

(11) **EP 1 847 301 A1**
(43) Date of publication of application: **24.10.2007**
(21) Application number: 06008063.7
(22) Date of filing: 19.04.2006
(51) Int. Cl.: A63B 22/02

(54) **Lubricating apparatus for an endless moving belt of an electric treadmill**

(71) Applicant: Wang, Leao, Taiping City, Taichung Hsien, 411 Taiwan R.O.C. (TW)
(72) Inventor: Wang, Leao, Taiping City, Taichung Hsien, 411 Taiwan R.O.C. (TW)
(74) Representative: Reichel, Wolfgang

(57) **Abstract**

A lubricating apparatus for an endless moving belt (14) of an electric treadmill (10) includes a base frame (20) with a U-shaped groove (30) laterally extended across the base frame (20). The U-shaped groove (30) is filled with felted wool (40) in which lubricant is contained. After assembly of the above-mentioned components, the felted wool (40) within the U-shaped groove (30) is in constant contact with the bottom surface of the endless moving belt (14), thereby ensuring a reliable and long-term lubrication.

## Description

### BACKGROUND OF THE INVENTION

### 1. Field's of the Invention

The invention relates to a lubricating apparatus for an endless moving belt of an electric treadmill, and more particularly to a lubricating apparatus that constantly lubricates the endless moving belt to ensure a smooth running of the endless moving belt.

### 2. Description of the Related Art

In general, an electric treadmill usually uses a motor (not shown in the figure) and a transmission belt (not shown in the figure) to drive a roller, and the roller drives the treadmill belt to run, so that a user can successfully perform a running exercise on the treadmill. To support the user's body weight, a running board is installed under the treadmill belt, such that when a user is performing a running exercise, the bottom surface of the treadmill belt produces a friction with the corresponding surface of the running board. Since there is a friction produced between the treadmill belt and the running board, manufacturers usually have to coat a layer of lubricant on the surface of the running board to prevent excessive frictions created between the treadmill belt and the running board that will wear out or damage the treadmill belt.

Since the running board and treadmill belt keep rubbing with each other, the lubricant will be used up gradually, and the lubricating effect will diminish.

Therefore, users have to ask the maintenance people of the manufacturer or distributor to apply lubricants to the treadmill and maintain the normal operation of the treadmill belt, after the treadmill has been used for a while. The lubricating process has to be done by an experienced technician, since many components (such as the protective bottom chassis, the roller, and the treadmill belt) of the treadmill have to be removed before the lubrication can be made. To avoid damages to the treadmill during the process of disassembling and reinstalling the components of the treadmill, it is recommended to ask professional people or experienced technician to handle the lubrication.

### SUMMARY OF THE INVENTION

In view of the inconvenient lubricating procedure of the prior art, the inventor of the present invention based on years of experience in the related industry to conduct extensive researches, and finally invented a lubricating apparatus for an endless moving belt of an electric treadmill. Therefore, it is a primary object of the invention to add a U-shaped groove containing a lubricant, and use the U-shaped groove together with a felted wool having a good absorbability to provide a lubrication at the bottom surface of the endless moving belt, in addition to applying a lubricant to the surface of the running board before the electronic treadmill is shipped out of the factory. Such arrangement can greatly extend the effective lubricating time and reduce the trouble of lubricating the treadmill.

Another objective of the present invention is to allow users to add and refill the lubricant according to a simple and easy method to save unnecessary maintenance cost. In the present invention, an oil filling pipe is wrapped by a wool felt, and the oil filling hole of the oil filling pipe is disposed at an appropriate position at an external side of the U-shaped groove.

### BRIEF DESCRIPTION OF THE DRAWINGS

The accomplishment of this and other objects of the invention will become apparent from the following description and its accompanying drawings of which:
FIG. 1 is a perspective view of a preferred embodiment of the present invention fitted to a treadmill;
FIG. 2 is a top view in accordance with the invention of FIG. 1;
FIG. 3 is a longitudinally sectional view in accordance with the invention of FIG. 1;
FIG. 4 is a schematic drawing of a refill tube in accordance with the invention; and
FIG. 5 is a schematic drawing of another embodiment of the invention.

### DETAILED DESCRIPTION OF THE PREFERRED EMBODIMENT

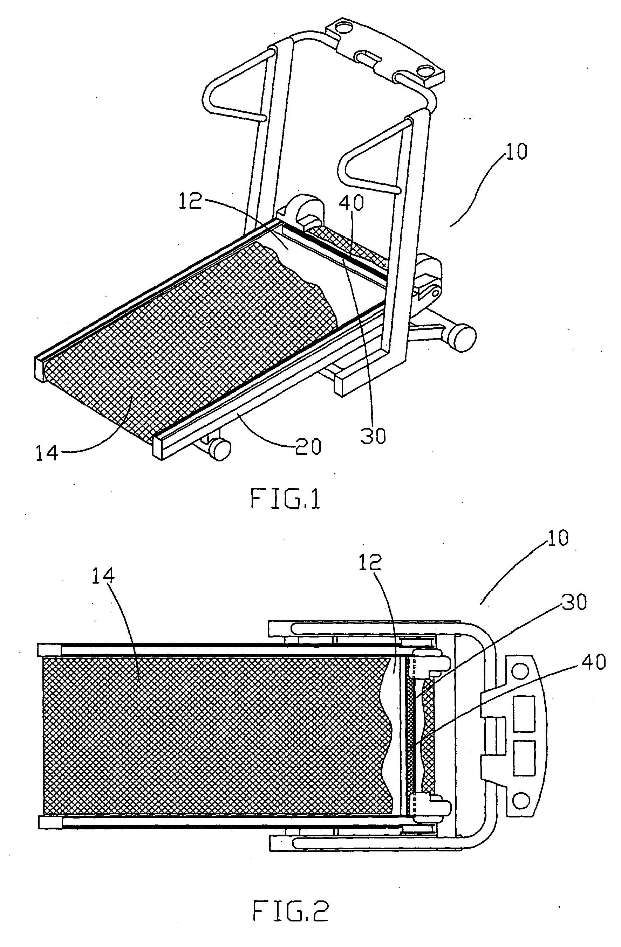

First of all, referring to FIGS. 1 and 2, a treadmill 10 includes a base frame 20 with a U-shaped groove 30 laterally extended across the base frame 20. The U-shaped groove 30 is filled with felted wool 40 in which lubricant is contained. After assembly of the above-mentioned components, the felted wool 40 within the U-shaped groove 30 is in constant contact with the bottom surface of the endless moving belt 14, thereby ensuring a reliable and long-term lubrication.

When the operator stands on the endless moving belt 14 for a walking exercise, the lubricant within the felted wool 40 will be continuously attached to the bottom surface of the endless moving belt 14 due to the siphon action. In this way, an effective lubrication between the endless moving belt 14 and the platform 12 is ensured.

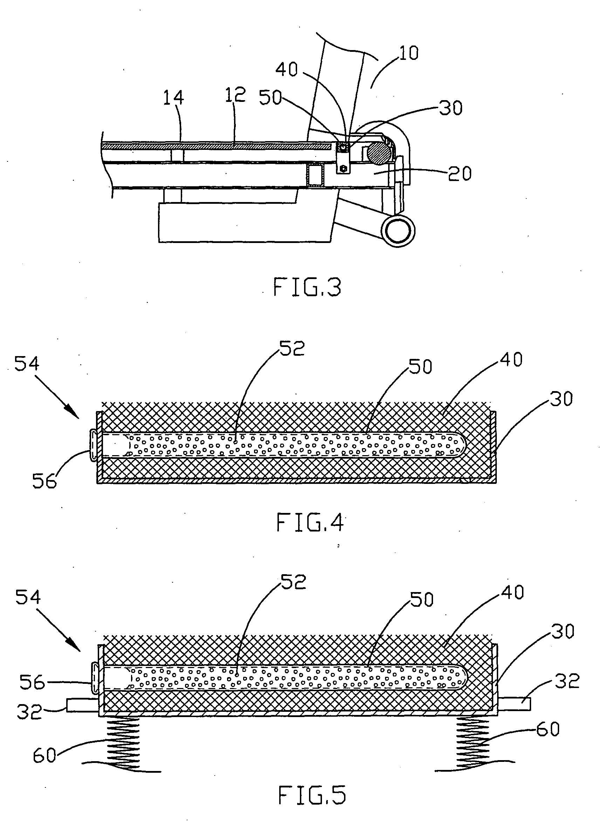

As shown in FIGS. 3 and 4, the operator can easily refill the U-shaped groove 30 with lubricant. In order to reduce the unnecessary maintenance cost, a refill tube 50 can be enclosed by the felted wool 40 while the refill tube 50 is formed with a plurality of oil outlets 52. Moreover, the refill tube 50 includes an oil filling hole 54 disposed at the external side of the U-shaped groove 30. Besides, a cock body 56 is employed to block up each of the oil filling holes 54. When the operator wants to refill the U-shaped groove 30 with the lubricant, it is only required to open a protection cover (not shown) at the bottom of the treadmill 10 and to pull out the cock body 56. In this way, the convenience and the practicalness can be ensured.

Referring to FIG. 5, elastic elements are fitted to the bottom of the U-shaped groove 30 in order to push up the U-shaped groove 30 for a constant contact with the corresponding surface of the endless moving belt 14. Moreover, the U-shaped groove 30 can be pivotally attached to the base frame 20 by pivoting shafts 32.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. A lubricating apparatus for an endless moving belt (14) of an electric treadmill (10), the treadmill (10) having a base frame (20) with a U-shaped groove (30) laterally extending across the base frame (20), the U-shaped groove (30) being filled with felted wool (40) in which lubricant is contained
whereby, after assembly of the above-mentioned components, the felted wool (40) within the U-shaped groove (30) is in constant contact with the bottom surface of the endless moving belt (14), thereby ensuring a reliable and long-term lubrication.

2. The lubricating apparatus for an endless moving belt (14) of an electric treadmill (10) of claim 1, wherein a refill tube (50) is enclosed by the felted wool (40) while the refill tube (50) is formed with a plurality of oil outlets (52), and wherein the refill tube (50) includes an oil filling hole (54) disposed at the external side of the U-shaped groove (30).

3. A lubricating apparatus for an endless moving belt (14) of an electric treadmill (10), the treadmill (10) having a base frame (20) with a U-shaped groove (30) laterally extending across the base frame (20), the U-shaped groove (30) being pivotally attached by pivoting shafts (32) to the base frame (20), the U-shaped groove (30) being filled with felted wool (40) in which lubricant is contained, the elastic elements are fitted to the bottom of the U-shaped groove (30) in order to push up the U-shaped groove (30) for a constant contact with the corresponding surface of the endless moving belt (14), whereby, after assembly of the above-mentioned components, the felted wool (40) within the U-shaped groove (30) is in constant contact with the bottom surface of the endless moving belt (14), thereby ensuring a reliable and long-term lubrication.

4. The lubricating apparatus for an endless moving belt (14) of an electric treadmill (10) of claim 3, wherein a refill tube (50) is enclosed by the felted wool (40) while the refill tube (50) is formed with a plurality of oil outlets (52), and wherein the refill tube (50) includes an oil filling hole (54) disposed at the external side of the U-shaped groove (30).
